Europäisches Patentamt

European Patent Office

Office européen des brevets

(11) Publication number: **0 049 893**

**B1**

(12) **EUROPEAN PATENT SPECIFICATION**

(45) Date of publication of patent specification: **15.01.86**

(51) Int. Cl.⁴: **B 29 D 30/00, B 07 C 5/34**

(21) Application number: **81108248.6**

(22) Date of filing: **12.10.81**

(54) A magnetized tire and method for discriminating such tires from each other.

(30) Priority: **13.10.80 JP 142828/80**

(43) Date of publication of application:
**21.04.82 Bulletin 82/16**

(45) Publication of the grant of the patent:
**15.01.86 Bulletin 86/03**

(84) Designated Contracting States:
**DE GB IT**

(56) References cited:
**DE-B-1 474 367**
**FR-A-2 309 008**
**GB-A-2 026 944**
**US-A-2 920 674**
**US-A-3 160 865**
**US-A-3 225 810**
**US-A-3 460 119**
**US-A-3 995 313**

**Computer storage systems and technology,**
**R.E. Matick, A. Wiley -Interscience Publication,**
**John Wiley & Sons, New York, London, Sidney,**
**Toronto, 1977, pages 362-374 and 397-403**

(73) Proprietor: **BRIDGESTONE TIRE COMPANY**
**LIMITED**
**10-1, Kyobashi 1-Chome Chuo-Ku**
**Tokyo (JP)**

(72) Inventor: **Marumoto, Yoshio**
**2800-1, Ogawahigashi-machi**
**Kodaira-shi Tokyo (JP)**
Inventor: **Tanaka, Shuichi**
**1-111, Kamishakujii**
**Nerima-ku Toyko (JP)**
Inventor: **Katsumata, Rokuro**
**4-4-12-601, Nagayama**
**Tama-shi Tokyo (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

# Description

The invention relates to a method for discriminating a tire comprising magnetized areas from other tires with differently magnetized areas, by which method a magnetical code is recorded by magnetizing areas of a bead of the tire at predetermined angular positions along the circular pass of the bead, and the magnetized areas are sensed in succession along said circular pass to generate signals in response to recorded magnetized areas according to the rotation angle of said tire in relation to an initial signal position. The invention relates also to a pneumatic tire comprising a bead imbedded along an inner circumferential edge of the tire, said bead having a plurality of magnetized areas at predetermined angular positions, whereby the angle between respective two adjacent areas are different along the circular part of said bead.

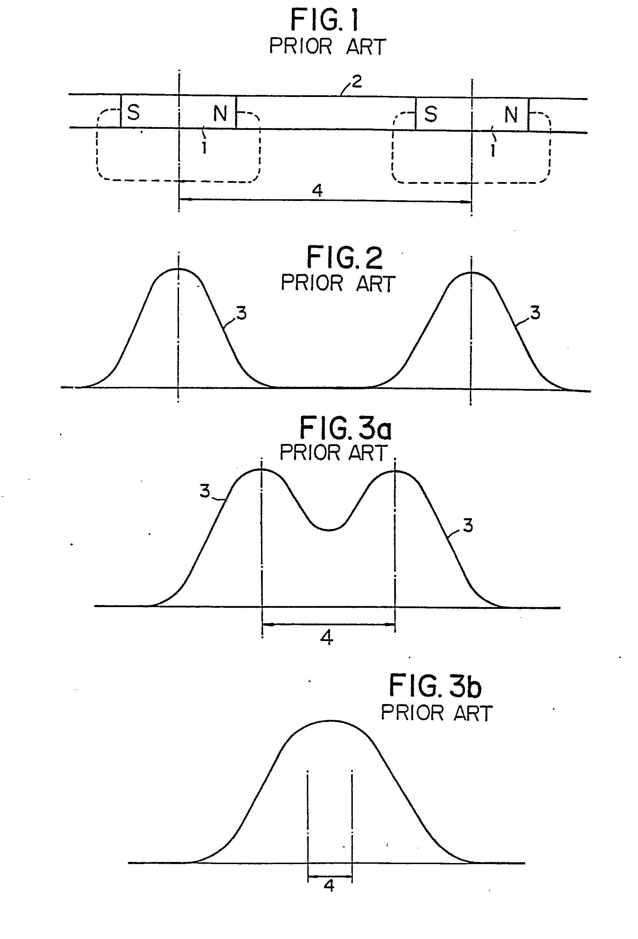

A tire of the mentioned construction is known from the publication US—A—2 920 674. A bead wire bundle of a rubber pneumatic tire is magnetized in a predetermined pattern. The spacing and length of the individual magnetized areas are provided in accordance with the predetermined code, so that the magnetized portions represent the desired information. The magnetic pattern in the bead wire bundle is provided during the molding of the tire by means of magnets, either permanent or electro-magnets, which are carried by the usual two rings of a conventional mold. The magnets are of varying length and spacing in accordance with a predetermined code and the magnetic pattern of the magnets is induced in the bead wire during the curing of the tire in the mold. The magnetically recorded information is picked-up by a sensor positioned adjacent to the magnetized bead of the tire. The magnetic pattern is picked up as the tire is rotated on a suitable turntable. By using such a known method, problems in reading the magnetized pattern arise, especially when the density of information is increased. These problems are described below with reference to Fig. 1 to 3B.

From the publication US—A—3 225 810 a pneumatic tire is known which comprises magnetizable elements of an elastomeric substance containing an electromagnetically different material. The elements are formed, for example, from any convenient rubber compound that is compatible with the rubber or other elastomeric material used in an area of the tire to which the element is fixed. The rubber stock from which the elements are made is mixed with an electromagnetically susceptible material such as powdered iron. These elements are magnetized and then fixed to the tire for forming the magnetical code. The thus stored magnetical code is read by a detection device comprising a pick-up head fixed on a central rotation axis. This pick-up head rotates around the tire which remains stationary, to read the magnetical code. Such a tire needs additional elements and for this reason is not easily and cheaply to be manufactured.

From the publication US—PS—3 460 119 a pneumatic tire is known which stores magnetical information on its two beads. On both beads indexing digits and information digits are recorded. The recording device comprises a first plurality of fixed magnetizing members to code the first bead and a second plurality of fixed magnetizing members to code the second bead. This method is complicated as information is written on two beads. Another difficulty is that the information is written before vulcanisation of the tire carcass. During vulcanisation the opposing beads may be shifted in relation to each other. Due to this effect it is no longer possible to detect the starting digit.

A disadvantage of all known tires with a magnetized code is that magnetized areas have to keep a rather long distance between each others, as will be explained in detail with reference to Fig. 1 to 3B below.

It is an object of the present invention to provide a method for clearly and unambiguously discriminating a tire from other tires still then when magnetized areas for a code for performing the said discrimination are arranged with high density. It is another object of the present invention to provide a pneumatic tire being appropriate for using a sensing step of the invented method.

The inventive method comprises the steps as mentioned in the first paragraph of the present description. It is further characterized in that

— magnetizing is provided in a manner that the polarity of each magnetized area is opposite to the polarities of the both adjacent areas, and
— sensing is done by only detecting the occurrence of signals without discriminating the polarities of said signals.

An inventive pneumatic tire comprises the features as described in the first paragraph of the present description, and, for being appropriate for using the sensing step of the inventive method, it is characterized in that the polarity of each magnetized area is opposite to the polarities of the both adjacent magnetized areas.

It is well-known in the general prior art of magnetical codes to use a pattern of differently magnetized areas. In these well-known methods, the sequence of detected polarities for the magnetized areas is used for reading stored information. However, in the present case, the information for discriminating a tire from other tires is given by the rotation angles under which a magnetized area is read. The arrangement of opposite polarities is not used for defining the information, but it is used for being able to read the otherwise stored information in a clear and unambiguous manner still then, when magnetized areas arranged with high density are used.

The invention will be further described by way of example with reference to the accompanying drawings, in which:

Fig. 1 is an illustration of magnetized areas according to the prior art method;

Fig. 2 is an illustration of a waveform generated by a sensor as it moves past the magnetized areas of Fig. 1;

Figs. 3a and 3b are illustrations of waveforms developed when the spacing between the magnetized areas of Fig. 1 is progressively narrowed;

Fig. 4 is an illustration of magnetized areas according to the present invention;

Fig. 5 is an illustration of the recording system incorporating the present invention;

Fig. 6 is an illustration of a schematic block diagram of the data recording system which generates bipolar recording pulses in synchronism with a signal recording to the relative rotation angle of the tire;

Figs. 7a to 7f are illustrations of a timing diagram associated with the block diagram of Fig. 6;

Fig. 8 is an illustration of a detector system which reproduces the recorded data signal after vulcanization process;

Fig. 9 is an illustration of a waveform generated by the magnetic sensor of Fig. 8 as its moves past alternately oppositely magnetized areas; and

Figs. 10a and 10b are illustrations of waveforms generated when the spacing between the magnetized area is progressibly narrowed to demonstrate the advantage of the present invention.

Before going into the detail of the present invention reference is first made to Figs. 1 to 3 in which the prior art magnetic recording method is illustrated. In the illustrated prior art method, areas 1 are magnetized along the circumferential path of a bead 2 so that the magnetic orientations of the magnetized areas are all aligned in the same circumferential direction as shown in Fig. 1. Therefore, the magnetic poles of each magnetized areas are opposite in polarity to the magnetic poles of adjacent magnetized areas. Fig. 2 is an illustration of the waveform of a signal detected by a magnetic sensor as it scans along the magnetized path of the bead 2. Because of the opposite arrangement of the polarity of adjacent poles, magnetic interferences tend to occur between adjacent magnetized areas, so that, if the areas spacing 4 between adjacent areas become small to increase the recording density, it is likely that the detected signals 3 will partially merge together as shown in Fig. 3a making it difficult to discriminate between them. If the spacing 4 is further reduced, the two signals will completely merge into a single waveform as illustrated in Fig. 3b. The prior art method thus imposes limitations on the spacing between magnetized areas. The allowance for the area spacing is further limited by the fact that since the bead 2 is enclosed by a rubber coating and since magnetic recording is carried out prior to vulcanization process, the intensity of detected signals tends to weaken after the vulcanization process compared with those detected prior to such processes. The prior art method thus requires a high intensity magnetic field for recording data signal, which in turn requires them to be spaced a distance sufficient to overcome the interference problem.

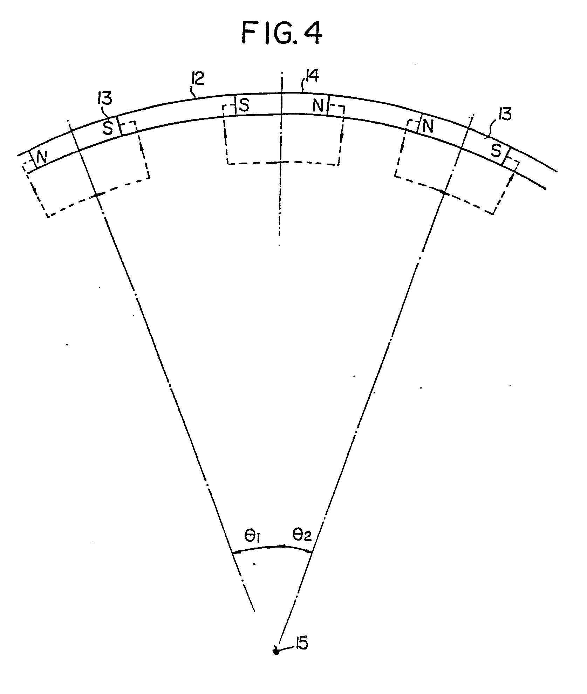

Referring now to Fig. 4 in which magnetized areas are shown in accordance with the present invention. As illustrated, adjacent magnetized areas 13 and 14 have opposite arrangement of polarity to each other along the path of the bead 12 so that the arrangement of the polarity of magnetized areas changes alternately in opposite direction as a magnetic detector moves from one magnetized area to another as it scans along the bead. The magnetized area or segments 13 are angularly spaced at angles $\theta_1$ and $\theta_2$ with respect to the magnetized area 14 and radially spaced from the center of tire as designated 15. Those angles ($\theta_1$, $\theta_2$, - - -) denote data signal for discriminating tires.

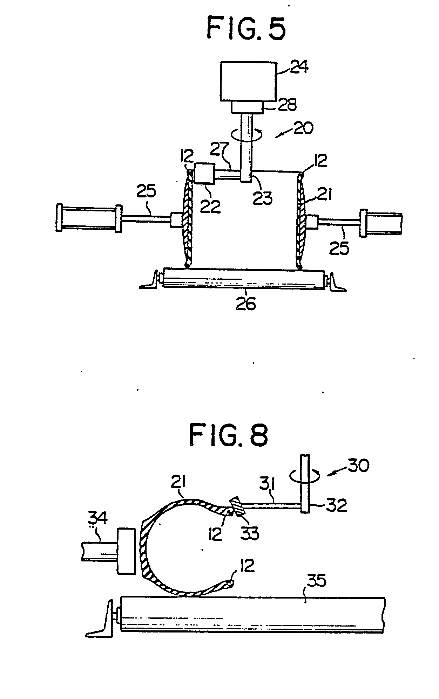

Fig. 5 is an illustration of a magnetic recording apparatus incorporating the present invention. The apparatus 20 comprises an electric motor 24 having its rotor shaft 23 extending downward toward a roller conveyer 26. A rotary arm 27 is connected to the rotor shaft 23. A magnetic writing head 22 is attached to the free end of rotary arm 27. A tire 21, formed of raw rubber, is placed on the conveyer 26 prior to vulcanization process and. held in position by means horizontally moving shafts .25. The motor 24 is activated by electrical signals to rotate the writing head 22 in proximity to the bead 12 which is positioned on the upper rim of the raw tire 21. The rotation of the rotor shaft 23 is changed into pulses by a pulse generator 28.

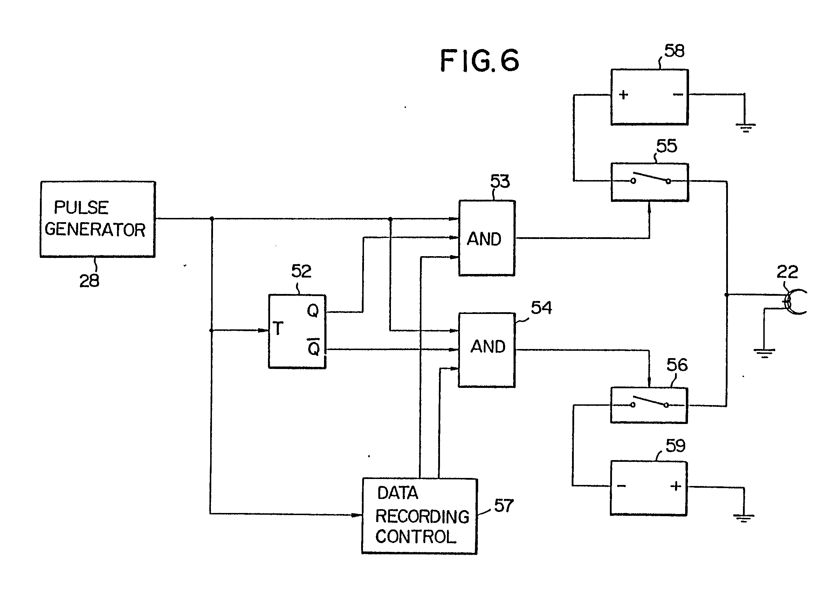

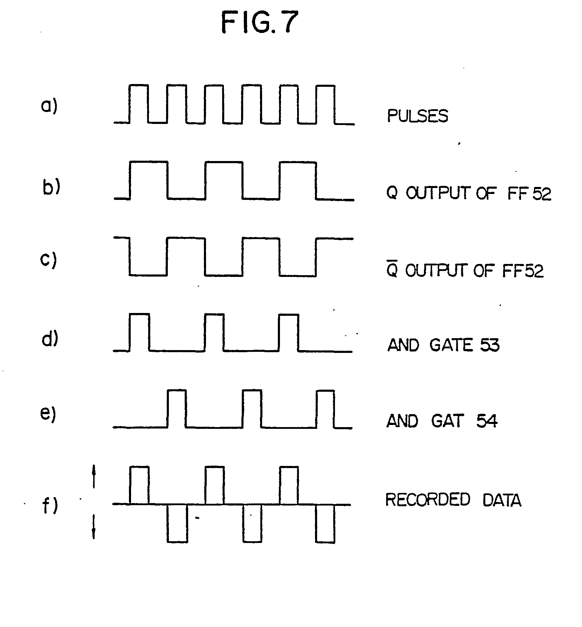

A control circuit, shown in Fig. 6, is designed to provide the writing head 22 with bipolar pulses at predetermined angular positions. The control circuit includes a pulse generator 28 which generates pulses or signal which denotes the relative rotation angular position of the tire shown in Fig. 7a. The pulses are supplied to a flip-flop 52 to toggle its binary state in response to the leading edge of each pulse so that the true output of flip-flop 52 is a train of square wave pulses at a frequency one half of the repetition frequency of the pulse as shown in Fig. 7b. The complementary output of the flip-flop 52 is shown in Fig. 7c. AND Gates 53 and 54 receive the true and complementary outputs of flip-flop 52, respectively, in order to pass the pulse from the pulse generator 28 to analog switches 55 and 56 when they receive a control pulse from a data recording control unit 57 which is synchronized with the pulse of generator 28. In the presence of such writing control pulse, the AND gate 53 generates pulses (Fig. 7d) to close the switch 55. A positive DC voltage is supplied from a first voltage source 58 to the writing head 22 to magnetize areas 13 (Fig. 7f). Whereas, AND gate 54 generates pulses (Fig. 7e) to close the switch 56 to supply a negative DC voltage from a second voltage source 59 to the writing head 22 to magnetize areas 14 (Fig. 7f). The data recording control unit 57 includes a counter for counting the pulses to determine the angular position of the writing head 22 with respect to a optional point where a special initial signal is recorded by writing head 22. The writing control pulses are generated when the output of the counter reaches a predetermined value which is specified from a data input circuit, not shown.

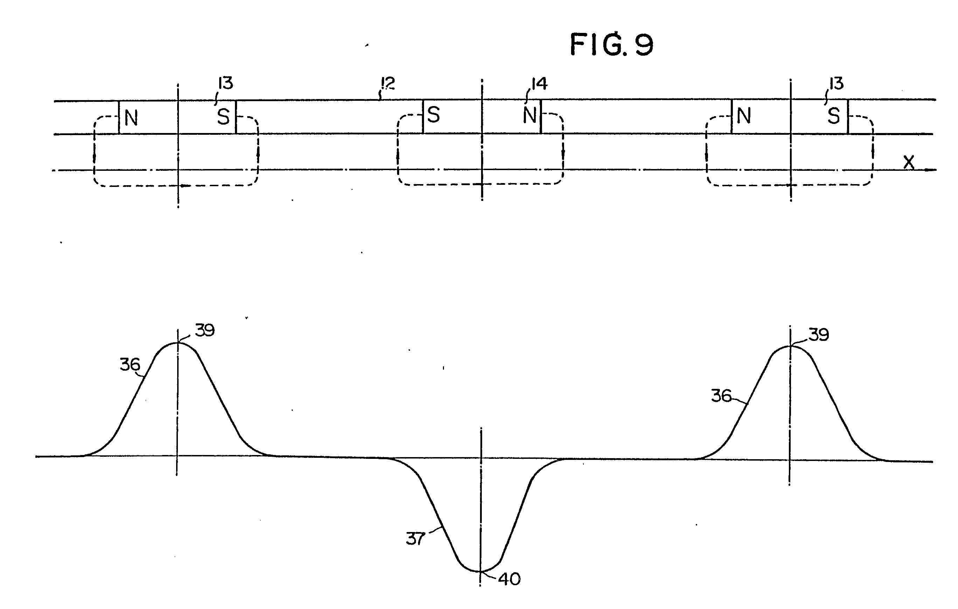

When reading the recorded data signal after vulcanization process, the tire 21 is placed on a conveyer 35, as shown in Fig. 8, and held in position by a holding arm 34. A magnetic sensing head 33 is attached to the free end of a rotary arm 31 which in turn is connected to a vertically extending rotor shaft 32 of an angle detector (not shown) which detects relative rotation angular of the tire. Rotation of the arm 31 causes the sensing head 33 to develop positive waves 36 and negative waves 37 in response to the sensing head 33 moving past the magnetized areas 13 and 14, as shown in Fig. 9, with respective maximum peaks 39, 40 coinciding with the center of the corresponding magnetized areas.

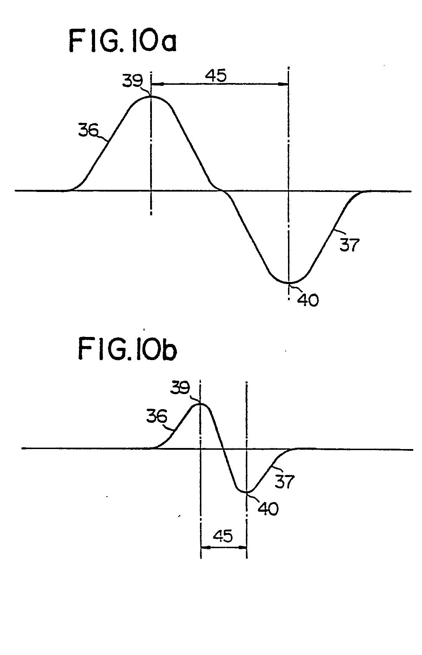

As will be understood from the foregoing that, since the recorded magnetized areas are oppositely poled in alternate fashion, the voltage waveforms detected by the sensor 33 have opposite peaks with a clearly spaced interval therebetween, whereby the detected magnetized areas are rendered distinguishable from each other even if the magnetized areas are closely spaced. Figs. 10a and 10b illustrate the detected waveforms as the data spacing 45 is rendered small compared with the spacing of data bits, Fig. 9, with the peaks 39 and 40 being clearly distinguishable from each other although the peak amplitude may be somewhat reduced.

**Claims**

1. A method for discriminating a tire from other tires, said method comprising the steps of

— recording a magnetical code by magnetizing areas of a bead (12) of the tire at predetermined angular positions ($\theta_1$, $\theta_2$) along the circular path of the bead, and
— sensing the magnetized areas in succession along said circular path to generate signals in response to recorded magnetized areas according to the rotation angle of said tire in relation to an initial signal position,

characterized in that

— magnetizing is provided in a manner that the polarity (NS) of each magnetized area is opposite to the polarities (SN) of the both adjacent areas, and
— sensing is done by only detecting the occurrence of signals without discriminating the polarities of said signals.

2. A pneumatic tire comprising a bead (12) embedded along an inner circumferential edge of the tire, said bead having a plurality of magnetized areas (13, 14) at predetermined angular positions, whereby the angles ($\theta_1$, $\theta_2$) between respective two adjacent areas are different along the circular path of said bead, said tire being appropriate for using the sensing step of the method of claim 1, characterized in that the polarity (NS) of each magnetized area is opposite to the polarities (SN) of the both adjacent magnetized areas.

**Revendications**

1. Procédé de discrimination d'un pneumatique parmi d'autres pneumatiques, ledit procédé comprenant les étapes consistant à:

— enregistrer un code magnétique en magnétisant des zones d'un talon (12) du pneumatique à des positions angulaires prédéterminés ($\theta_1$, $\theta_2$) sur la circonférence du talon, et
— détecter les zones magnétisées successivement le long de cette circonférence pour générer des signaux en réponse aux zones magnétisées enregistrées selon l'angle de rotation dudit pneumatique par rapport à une position de signal initial,

caractérisé par le fait que:

— la magnétisation est effectuée de manière que la polarité (NS) de chaque zone magnétisée soit opposée aux polarités (SN) des deux zones adjacentes, et
— la détection est effectuée en détectant uniquement l'apparition de signaux sans discrimination des polarités desdits signaux.

2. Pneumatique comprenant un talon (12) enrobé le long du bord circonferénciel intérieur du pneumatique, ledit talon comprenant une pluralité de zones magnétisées (13, 14) à des positions angulaires prédéterminées, de façon que les angles ($\theta_1$, $\theta_2$) entre deux zones adjacentes respectives soient différents le long de la circonférence dudit talon, ledit pneumatique se prêtant à la mise en oeuvre de l'étape de détection du procédé selon la revendication 1, caractérisé par le fait que la polarité (NS) de chaque zone magnétisée est opposée aux polarités (SN) des deux zones magnétisées adjacentes.

**Patentansprüche**

1. Verfahren zur Unterscheidung eines Reifens von anderen Reifen, mit folgenden Verfahrensschritten:

— Einbringen eines magnetischen Kodes durch Magnetisierung von Bereichen eines Wulstes (12) des Reifens an vorbestimmten Winkelpositionen ($\theta_1$, $\theta_2$) entlang des kreisförmigen Wulstverlaufs und

— aufeinanderfolgende Erfassung der magnetisierten Bereiche entlang des kreisförmigen Wulstverlaufs zur Erzeugung von Signalen in Abhängigkeit der eingebrachten magnetisierten Bereiche sowie in Übereinstimmung mit dem Rotationswinkel des Reifens in Bezug auf eine Anfangssignalposition,

dadurch gekennzeichnet, daß

— die Magnetisierung so durchgeführt wird, daß die Polarität (NS) jedes magnetisierten Bereichs gegenüber den Polaritäten (SN) seiner beiden benachbarten magnetisierten Bereiche entgegengesetzt ist, und daß
— bei der Erfassung nur das Auftreten der Signale detektiert wird, ohne die Signale hinsichtlich ihrer Polaritäten zu unterscheiden.

2. Pneumatischer Reifen mit einem an seinem inneren Reifenunfangsrand eingebetteten Wulst (12), der eine Vielzahl von magnetisierten Bereichen (13, 14) an vorbestimmten Winkelpositionen besitzt, bei dem die Winkel ($\theta_1$, $\theta_2$) zwischen jeweils zwei benachbarten Bereichen entlang des kreisförmigen Wulstverlaufs voneinander verschieden sind, und dessen magnetisierte Bereiche gemäß Anspruch 1 erfaßbar sind, dadurch gekennzeichnet, daß die Polarität (NS) jedes magnetisierten Bereichs gegenüber den Polaritäten (SN) seiner beiden benachbarten magnetisierten Bereiche entgegengesetzt ist.

**0 049 893**

# FIG. 1
PRIOR ART

# FIG. 2
PRIOR ART

# FIG. 3a
PRIOR ART

# FIG. 3b
PRIOR ART

1

# FIG. 4

# FIG. 5

# FIG. 8

# FIG.6

PULSE GENERATOR 28

T 52 Q Q̄

AND 53

AND 54

DATA RECORDING CONTROL 57

58 + −

55

56

59 − +

22

0 049 893

# FIG.7

a) PULSES

b) Q OUTPUT OF FF 52

c) $\overline{Q}$ OUTPUT OF FF52

d) AND GATE 53

e) AND GAT 54

f) RECORDED DATA

# FIG. 9

0 049 893

## FIG. 10a

## FIG. 10b